# EUROPÄISCHE PATENTSCHRIFT

(11) **EP 4 552 793 B1**
(45) Veröffentlichungstag und Bekanntmachung des Hinweises auf die Patenterteilung: **24.06.2026**
(21) Anmeldenummer: 24207907.7
(22) Anmeldetag: 21.10.2024
(51) Int. Cl.: B23Q 3/06, B23Q 17/00

(54) **HALTESYSTEM ZUR VORRÜBERGEHENDEN HALTERUNG EINES WERKSTÜCKS, VERFAHREN ZUR ANPASSUNG EINER HALTERUNGSKRAFT BEI EINER HALTERUNGSANORDNUNG, COMPUTERPROGRAMM UND VORRICHTUNG ZUR DATENVERARBEITUNG**
WORK HOLDING SYSTEM, METHOD OF ADJUSTING WORK HOLDING FORCE IN MOUNT ASSEMBLY, COMPUTER PROGRAM, AND DATA PROCESSING DEVICE
SYSTÈME DE RETENUE POUR LA FIXATION PROVISOIRE D'UNE PIÈCE, PROCÉDÉ DE RÉGLAGE D'UNE FORCE DE RETENUE DANS UN AGENCEMENT DE RETENUE, PROGRAMME INFORMATIQUE ET DISPOSITIF DE TRAITEMENT DE DONNÉES

(30) Priorität: 10.11.2023 DE 102023131281
(43) Veröffentlichungstag der Anmeldung: 14.05.2025
(73) Patentinhaber: Murrelektronik GmbH, 71570 Oppenweiler (DE)
(72) Erfinder: Prein, Olaf, 32676 Lügde-Rischenau (DE); Bosch, Marco, 73235 Weilheim a. d. Teck (DE)
(74) Vertreter: Bösherz Goebel Patentanwälte

(56) Entgegenhaltungen:
- EP-A1- 2 363 235
- EP-B1- 3 283 256
- DE-A1- 102018 122 027
- DE-A1- 102018 212 771

## Beschreibung

Die vorliegende Erfindung betrifft ein Haltesystem zur vorrübergehenden Halterung eines Werkstücks, ein Verfahren zur Anpassung einer Halterungskraft bei einer Halterungsanordnung sowie ein Computerprogramm und eine Vorrichtung zur Datenverarbeitung zur Durchführung eines solchen Verfahrens.

Haltesysteme mit einer Halterungsanordnung sind prinzipiell aus dem Stand der Technik bekannt. Beispielsweise beschreibt die DE 10 2021 002 418 B3 ein Verfahren zum Erstellen von Greiferablaufprogrammen. EP 3 283 256 B1 offenbart ein Haltesystem nach dem Oberbegriff von Anspruch 1.

Es ist eine Aufgabe der vorliegenden Erfindung, ein verbessertes Haltesystem zur vorrübergehenden Halterung eines Werkstücks sowie ein verbessertes Verfahren zur Anpassung einer Halterungskraft bei einer Halterungsanordnung bereitzustellen.

Diese Aufgabe wird gelöst durch die Gegenstände der unabhängigen Ansprüche. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Haltesystem beschrieben sind, selbstverständlich auch im Zusammenhang mit dem erfindungsgemäßen Verfahren, der erfindungsgemäßen Vorrichtung sowie dem erfindungsgemäßen Computerprogramm, und jeweils umgekehrt, so dass bezüglich der Offenbarung zu den einzelnen Erfindungsaspekten stets wechselseitig Bezug genommen wird bzw. werden kann.

Gemäß einem ersten Aspekt wird ein Haltesystem zur vorrübergehenden Halterung eines Werkstücks angegeben.

Das Haltesystem umfasst dabei eine Halterungsanordnung, die mindestens eine oder mehrere bestehende Halterungseinrichtungen aufweist, um ein Werkstück mit einer Halterungskraft der jeweiligen Halterungseinrichtung zu halten. Weiter kann das Haltesystem ein Erfassungsmittel umfassen, das ausgebildet ist, eine Veränderung und/oder Differenz der Halterungskraft der bestehenden Halterungseinrichtung(en) zu quantifizieren. Ferner kann das Haltesystem ein Einstellungsmittel aufweisen, das ausgebildet ist, die Halterungskraft einer weiteren, insbesondere neuen, Halterungseinrichtung auf Basis der quantifizierten Veränderung/Differenz anzupassen. Die ermöglicht insbesondere eine dynamische Steuerung der Haltekraft angepasst an die bestehende Situation des Haltesystems. Damit kann der Vorteil erzielt werden, dass eine homogenere und gleichmäßigere Haltekraft durch sämtliche Halterungseinrichtungen ausgeübt wird und auf diese Weise die Zuverlässigkeit und Verarbeitungsqualität beim Betrieb des Haltesystems sowie die Wartung und Reparatur des Haltesystems verbessert wird. Die Veränderung kann dabei bspw. eine Veränderung der Halterungskraft gegenüber einer Referenzhalterungskraft, z. B. der Halterungskraft in einem Ursprungszustand, bspw. Einbauzustand der bestehenden Halterungseinrichtung(en) sein.

Das erfindungsgemäße Haltesystem dient insbesondere dazu, eine Halterungskraft einer neuen, insbesondere für einen Ersatz vorgesehenen, Halterungseinrichtung auf die Halterungskraft von einer oder mehreren bestehenden Halterungseinrichtungen anzupassen, um so eine homogene und gleichmäßige Halterungskraft auf ein Werkstück beim Halten auszuüben. Dabei ist es möglich, dass eine auszutauschende, insbesondere defekte, Halterungseinrichtung durch die neue Halterungseinrichtung ersetzt wird.

Vorteilhafterweise umfasst das Haltesystem, das auch als Haltevorrichtung, Halterungsvorrichtung und/oder Halterungssystem bezeichnet werden kann, zunächst eine Halterungsanordnung, die eine oder mehrere Halterungseinrichtungen aufweist, um ein Werkstück mit einer Halterungskraft zu halten. Diese Halterungseinrichtungen können dabei auch als bestehende oder vorhandene Halterungseinrichtungen bezeichnet werden.

Die Halterungseinrichtungen weisen dabei insbesondere Halterungsmittel auf, die ausgebildet sind, ein Werkstück zu fixieren, zu greifen und/oder festzuhalten und können auch als Greifer oder Greifeinrichtungen bezeichnet werden.

Die Halterungseinrichtungen können dabei ausgebildet sein, ein Werkstück mit einer jeweiligen Halterungskraft, die auch als Haltekraft bezeichnet werden kann, vorübergehend bzw. für einen vordefinierten Zeitraum zu halten.

Dieses Halten kann insbesondere dazu dienen, das Werkstück für einen oder mehrere Beoder Verarbeitungsschritte in einer Produktionsstraße zu halten, sodass eine Bearbeitungseinrichtung diese Schritte an dem Werkstück durchführen kann.

Das Haltesystem kann auch ein Erfassungsmittel umfassen, das ausgebildet ist, eine Veränderung und/oder Differenz der Halterungskraft der bestehenden Halterungsmittel zu ermitteln und insbesondere zu quantifizieren.

Bei der Veränderung kann es sich insbesondere um eine Verschlechterung und/oder eine Verringerung der Halterungskraft handeln, die beispielsweise gegenüber eine initialen voreingestellten und/oder vorbestimmten Halterungskraft, die auch als Referenzhalterungskraft bezeichnet werden kann, ermittelt wird. Die Veränderung der Halterungskraft kann insbesondere aufgrund von Alterung und/oder Verschleiß eintreten.

Die Quantifizierung der Veränderung kann dabei insbesondere absolut oder relativ ermittelt werden, beispielsweise in Bezug auf die Referenzhalterungskraft, die dem Erfassungsmittel bereitgestellt wird oder davon abgerufen wird.

Das Haltesystem kann auch ein Einstellungsmittel umfassen, das ausgebildet ist, die Halterungskraft einer weiteren Halterungseinrichtung auf Basis der quantifizierten Veränderung anzupassen.

Bei der weiteren Halterungseinrichtung kann es sich insbesondere um eine von den bestehenden Halterungseinrichtungen verschiedene Halterungseinrichtung handeln, die jedoch insbesondere vom selben Hersteller, Typ oder Modell wie die bestehenden Halterungseinrichtungen sein kann.

Insbesondere kann es sich bei der weiteren Halterungseinrichtung um eine Halterungseinrichtung handeln, die keine und/oder nicht dieselbe Veränderung erfahren hat, wie die bestehenden Halterungseinrichtungen.

Beispielsweise handelt kann sich bei der weiteren Halterungseinrichtung um eine Halterungseinrichtung handeln, die neu und/oder unbenutzt oder zumindest in einem geringeren Umfang als die bestehenden Halterungseinrichtungen benutzt wurde. Insbesondere kann die weitere Halterungseinrichtung keine oder nur eine geringere Veränderung, Verschlechterung und/oder Verringerung der Halterungskraft gegenüber einer Referenzhalterungskraft aufweisen.

Auch ist es denkbar, dass sich die weitere Halterungseinrichtung von den bestehenden Halterungseinrichtungen durch einen Typ und/oder einen Aufbau und/oder einer technischen Spezifikation unterscheidet. In diesem Fall kann die Anpassung auch dazu dienen, die Differenz der Haltekraft aufgrund dieses Unterschieds zu minimieren.

Durch das erfindungsgemäße Haltesystem ist es insbesondere möglich, eine Halterungskraft einer neuen, für einen Ersatz vorgesehenen Halterungseinrichtung auf die Halterungskraft von einer oder mehreren bestehenden Halterungseinrichtungen anzupassen, um so eine homogene und gleichmäßige Halterungskraft auf ein Werkstück beim Halten auszuüben.

Es ist möglich, dass das Haltesystem weiter ein Erkennungsmittel aufweist, das ausgebildet ist, ein Bereitstellen der weiteren Halterungseinrichtung zu erkennen, vorzugsweise ein Ersetzen einer auszutauschenden Halterungseinrichtung mit der weiteren Halterungseinrichtung zu erkennen, wobei das Einstellungsmittel ausgebildet sein kann, die Halterungskraft der weiteren Halterungseinrichtung in Erwiderung auf die erkannte Bereitstellung einzustellen. Insbesondere kann das Erkennungsmittel ausgebildet sein, ein Ersetzen einer auszutauschenden, bestehenden Halterungseinrichtung mit der weiteren Halterungseinrichtung zu erkennen, beispielsweise, weil die bestehende Halterungseinrichtung eine Veränderung, insbesondere eine Verschlechterung, der Halterungskraft über einen vorbestimmten Schwellwert hinaus, insbesondere auf Null erfahren hat, weil die auszutauschende bestehende Halterungseinrichtung ausgefallen ist und/oder einen Defekt oder Schaden erlitten hat und/oder weil die auszutauschende bestehende Halterungseinrichtung ein vorbestimmtes maximales Betriebsalter, eine vorbestimmte maximale Anzahl von durchgeführten Haltevorgängen und/oder eine vorbestimmte maximale Summe von einer aufgewendeten Halterungskraft erreicht bzw. durchgeführt hat. Alternativ oder zusätzlich kann von der weiteren Halterungseinrichtung ein Informationselement umfasst sein, das auf das Alter und/oder den Zustand, insbesondere dass es neu und/oder unbenutzt ist, hinweist, und der von dem Erkennungsmittel ausgelesen werden kann. Das Einstellungsmittel kann dabei ausgebildet sein, die Halterungskraft der weiteren Halterungseinrichtung in Erwiderung auf die erkannte Bereitstellung der weiteren Halterungseinrichtung einzustellen. Insbesondere löst das Bereitstellen der weiteren Halterungseinrichtung aus, dass das Einstellungsmittel die Halterungskraft der weiteren Halterungseinrichtung einstellt. Hierdurch wird es ermöglicht, die Halterungskraft der weiteren Halterungseinrichtung besonders automatisiert und ohne menschliches Zutun einzustellen.

Es ist ferner möglich, dass das Erfassungsmittel ausgebildet ist, die Veränderung dadurch zu quantifizieren, dass ein Betriebsalter der bestehenden Halterungseinrichtungen ermittelt wird, um eine alterungsbedingte Reduzierung der Halterungskraft basierend auf dem ermittelten Betriebsalter zu bestimmen. Es kann somit ein Betriebsalter der bestehenden Halterungseinrichtungen ermittelt werden. Dies kann beispielsweise durch eine Datumsund/oder eine Uhrfunktion erreicht werden, die insbesondere beim Bereitstellen der Halterungseinrichtung als neue bzw. weitere Halterungseinrichtung ausgelöst wird. Alternativ oder zusätzlich kann das Betriebsalter über einen Betriebsstundenzähler ermittelt werden. Dabei kann insbesondere für jede der bestehenden Halterungseinrichtungen ein eigener Wert ermittelt werden. Dies ist insbesondere dann vorteilhaft, wenn die bestehenden Halterungseinrichtung ein unterschiedliches Betriebsalter aufweisen. Hierdurch wird es ermöglicht, die Veränderung besonders kostengünstig zu quantifizieren, da keine unmittelbaren Kraftsensoren nötig sind.

Es ist auch möglich, dass das Erfassungsmittel ausgebildet ist, die Veränderung dadurch zu quantifizieren, dass eine Anzahl von durchgeführten Haltevorgängen der bestehenden Halterungseinrichtungen ermittelt wird, um eine betriebsbedingte Reduzierung der Halterungskraft auf Basis der ermittelten Haltevorgängen zu bestimmen. Insbesondere kann jeder Haltervorgang jeder bestehenden Halterungseinrichtung gezählt bzw. aufsummiert werden, um die Anzahl von durchgeführten Haltevorgängen zu ermitteln. Dabei kann insbesondere für jede der bestehenden Halterungseinrichtungen ein eigener Wert ermittelt werden. Dies ist insbesondere dann vorteilhaft, wenn die bestehenden Halterungseinrichtung unterschiedliche Anzahlen von durchgeführten Haltervorgängen aufweisen. Auch hierdurch wird es ermöglicht, die Veränderung besonders kostengünstig zu quantifizieren, da keine unmittelbaren Kraftsensoren nötig sind.

Es ist ebenso möglich, dass das Erfassungsmittel ausgebildet ist, die Veränderung dadurch zu quantifizieren, dass eine Summe einer aufgewendeten Halterungskraft der bestehenden Halterungseinrichtungen über einen vergangenen Betrieb der bestehenden Halterungseinrichtung ermittelt wird, um eine belastungsbedingte Reduzierung der Halterungskraft basierend auf der ermittelten Summe zu bestimmen. Die Summe der aufgewendeten Halterungskraft kann dabei sowohl über eine Krafterfassungseinrichtung ermittelt werden, wie diese im Zusammenhang mit der folgenden Ausführungsform näher beschrieben wird, als auch über eine Multiplikation der initialen Halterungskraft mit der Anzahl der durchgeführten Haltevorgängen. Dabei kann beispielsweise ein Korrekturfaktor zugrunde gelegt werden, der eine Veränderung der Halterungskraft berücksichtigt bzw. zumindest abschätzt, und/oder die Summe der aufgewendeten berechneten Halterungskraft ohne Korrekturfaktor zugrunde gelegt werden, welcher jedoch zur tatsächlich veränderten Halterungskraft proportional ist. Dabei kann insbesondere für jede der bestehenden Halterungseinrichtungen ein eigener Wert ermittelt werden. Dies ist insbesondere dann vorteilhaft, wenn die bestehenden Halterungseinrichtung verschiedene Halterungskräftesummen aufgebracht haben bzw. unterschiedliche Anzahlen von durchgeführten Haltervorgängen aufweisen. Durch diese Ausführungsform wird es ermöglicht, die Veränderung besonders genau zu quantifizieren und nicht nur lediglich abzuschätzen.

Das Erfassungsmittel kann eine Erfassung der Halterungskraft, insbesondere der auf einem Werkstück aufgebrachten Kraft, vorzugsweise durch mittels Elektromotoren angetriebenen Greifern, an den Halterungseinrichtungen z. B. dadurch vornehmen, dass es die Kraft, die ausgeübt wird, messtechnisch erfasst. Hierzu können Drucksensoren oder Kraftmessdosen verwendet werden. Das Erfassungsmittel ist z. B. ausgebildet als ein elektronisches Gerät wie ein Steuergerät, Kraftmessgerät oder ein Sensor. Ferner kann eine automatisiert und insbesondere elektronisch durchgeführte Berechnung vorgesehen sein, um auf Basis des messtechnisch erfassten Ergebnisses die Veränderung der Halterungskraft zu quantifizieren. Das Einstellungsmittel kann in Kommunikationsverbindung mit dem Erfassungsmittel stehen und/oder dazu ausgebildet sein, die Halterungskraft einer weiteren Halterungseinrichtung auf Basis der quantifizierten Veränderung anzupassen. Hierzu kann bspw. eine Steuerung in einer Automatisierungseinrichtung parametrisiert und/oder konfiguriert und/oder umprogrammiert werden. Damit kann bspw. beeinflusst werden, wie die Steuerung einen Elektromotor ansteuert, welcher die Halterungseinrichtung zum Greifen des Werkstücks bewegt. Das Einstellungsmittel ist zumindest teilweise bspw. ausgebildet als ein Computerprogramm, das die quantifizierte Veränderung der Halterungskraft der Halterungseinrichtung(en) ermittelt und auf Basis dieser Informationen die Halterungskraft der weiteren Halterungseinrichtung anpasst. Das Computerprogramm kann dabei in einer Automatisierungseinrichtung integriert sein und über eine Schnittstelle mit dem Erfassungsmittel kommunizieren. Durch die Anpassung der Halterungskraft kann bspw. die Greifkraft des Werkstücks optimiert werden, um eine sichere und effektive Bearbeitung zu gewährleisten.

Es ist auch möglich, dass das Erfassungsmittel ausgebildet ist, eine Halterungskraft der bestehenden Halterungseinrichtungen zu ermitteln und die Veränderung basierend auf der ermittelten Halterungskraft zu quantifizieren, wobei die Halterungskraft von einer Krafterfassungseinrichtung erfasst, und für das Erfassungsmittel bereitgestellt werden kann. Es kann somit eine Halterungskraft nicht nur abgeschätzt oder basierend auf anderen Informationen ermittelt, sondern tatsächlich gemessen werden. Dies erfolgt mithilfe einer oder mehrerer Krafterfassungseinrichtungen. Insbesondere kann für jede der bestehenden Halterungseinrichtungen eine eigene Krafterfassungseinrichtung vorgesehen sein. Insbesondere wird gemäß dieser Ausführungsform zumindest, insbesondere ausschließlich diejenige Halterungskraft der bestehende Halterungseinrichtung, die ausgetauscht werden soll, ermittelt insbesondere, weil sie ein vorbestimmtes maximales Betriebsalter, eine vorbestimmte maximale Anzahl von durchgeführten Haltevorgängen und/oder eine vorbestimmte maximale Summe von einer aufgewendeten Halterungskraft erreicht bzw. durchgeführt hat. Auch hierdurch wird es ermöglicht, die Veränderung besonders genau zu quantifizieren und nicht lediglich abzuschätzen.

Es ist ebenso möglich, dass das Erfassungsmittel ausgebildet ist, die jeweilige Halterungskraft der mehreren Halterungseinrichtungen zu ermitteln und einen Mittelwert daraus zu ermitteln, wobei das Einstellungsmittel ausgebildet sein kann, die Halterungskraft der weiteren Halterungseinrichtung auf den Mittelwert einzustellen. Es kann somit ein Mittelwert insbesondere über alle mithilfe der durch die Krafterfassungseinrichtungen erfassten Halterungskräfte erfasst und gebildet und die Halterungskraft der weiteren Halterungseinrichtung auf diesen Mittelwert eingestellt werden. Hierdurch wird es ermöglicht, eine besonders robuste Quantifizierung der Veränderung zu ermitteln.

Es ist auch möglich, dass das Erfassungsmittel ausgebildet, die Veränderung der Halterungskraft der bestehenden Halterungseinrichtungen und der weiteren Halterungseinrichtung zu ermitteln, wobei das Einstellungsmittel ausgebildet sein kann, die Halterungskraft der weiteren Halterungseinrichtung basierend auf den ermittelten Halterungskräften einzustellen. Es können somit insbesondere nicht nur die bestehenden Halterungseinrichtungen mit einer Krafterfassungseinrichtungen versehen sein, sondern auch die weitere Halterungseinrichtung. Dabei kann insbesondere in einem Test- oder Probelauf die Halterungskraft aller Halterungseinrichtungen, insbesondere auch der weiteren Halterungseinrichtung, erfasst werden und im Anschluss die Halterungskraft der weiteren Halterungseinrichtung auf die der bestehenden Halterungseinrichtungen, insbesondere einem Mittelwert daraus, eingestellt werden. Hierdurch wird eine noch genauere Quantifizierung bzw. Einstellung ermöglicht. Insbesondere ist es hierdurch möglich, die Halterungskraft der weiteren Halterungseinrichtung nicht nur anzunehmen oder zu schätzen, sondern genau zu quantifizieren und somit besonders genau einzustellen.

Es ist ebenso möglich, dass ein Spannrahmen vorgesehen ist, um das Werkstück für eine Bearbeitung zu fixieren, wobei am Spannrahmen die mehreren Halterungseinrichtungen, insbesondere in der Form von Greifern, angeordnet sein können, um das Werkstück an unterschiedlichen Stellen mit gleichmäßiger Halterungskraft zu halten, wobei die Halterungseinrichtungen jeweils einen Elektromotor zur Bereitstellung der Halterungskraft, um eine Greifbewegung eines Greifmittels zum Halten des Werkstücks zu steuern, und ein Getriebe zur Übertragung der bereitgestellten Halterungskraft von dem Elektromotor an das Greifmittel, um die Greifbewegung am Werkstück vorzunehmen, umfassen können. Dabei kann der Elektromotor zur Energie- und/oder Signalübertragung, insbesondere zur Übertragung von Daten- und/oder Steuersignalen, mit einer Automatisierungseinrichtung verbunden sein, wobei das Erfassungsmittel und das Einstellungsmittel und vorzugsweise das Erkennungsmittel optional Teil der Automatisierungseinrichtung und insbesondere eines Computerprogrammes der Automatisierungseinrichtung sein können. Die Verbindung zwischen der Automatisierungseinrichtung und dem Elektromotor kann dabei über entsprechende Kabel zur Daten- und Energieübertragung vorgesehen sein.

Ferner können bspw. mindestens 5 oder mindestens 10 Halterungseinrichtungen, auch Greifer bezeichnet, am Spannrahmen dadurch angeordnet sein, dass sie daran durch Schrauben, Bolzen oder andere Befestigungselemente befestigt sind. Die genaue Anzahl und Platzierung der Halterungseinrichtungen hängt dabei insbesondere von der Größe und Beschaffenheit der zu fixierenden Werkstücke ab. Eine Bewegung der Halterungseinrichtungen kann bspw. dadurch erzielt werden, dass sie von einem Motor, insbesondere Elektromotor angetrieben werden, der über eine mechanische Verbindung mit den Halterungseinrichtungen verbunden ist. Alternativ können die Halterungseinrichtungen auch pneumatisch oder hydraulisch betrieben werden, indem sie mit einem entsprechenden Druckmittel beaufschlagt werden. Eine weitere Möglichkeit ist die Verwendung von elektromagnetischen Feldern, die die Halterungseinrichtungen bewegen, indem sie auf magnetische Materialien in den Halterungseinrichtungen einwirken. Der Spannrahmen kann hergestellt sein aus Aluminium oder Stahl. Insbesondere kann auch ein Handspanner vorgesehen sein, der zur manuellen Fixierung des Werkstücks am Spannrahmen ausgebildet ist.

Es ist auch möglich, dass das Einstellungsmittel ausgebildet ist, die Halterungskraft der weiteren Halterungseinrichtung gegenüber der Halterungskraft der jeweiligen bestehenden Halterungseinrichtung zu reduzieren, vorzugsweise durch eine Anpassung einer Energieund/oder Signalübertragung von einer Automatisierungseinrichtung an die weitere Halterungseinrichtung, um die Halterungskräfte gleichmäßig am Werkstück zu verteilen. Hierdurch wird eine besonders schnelle und einfache Anpassung der Halterungskraft ermöglicht.

Gemäß einem weiteren Aspekt wird ein Verfahren zur Anpassung einer Halterungskraft bei einer Halterungsanordnung angegeben, bei der zu mindestens einer oder mehreren bestehenden Halterungseinrichtungen mindestens eine weitere Halterungseinrichtung bereitgestellt wird, um ein Werkstück mit einer gleichmäßigen Halterungskraft der jeweiligen Halterungseinrichtung zu halten.

Das Verfahren umfasst dabei die Schritte Ermitteln einer Veränderungsangabe, um eine Veränderung der Halterungskraft, insbesondere der bestehenden Halterungseinrichtungen, zu quantifizieren, und Initiieren einer Anpassung der Halterungskraft der weiteren Halterungseinrichtung auf Basis der Veränderungsangabe, um die quantifizierte Veränderung auszugleichen.

Das Verfahren lässt sich insbesondere teilweise oder vollständig mit einem zuvor beschriebenen Haltesystem durchführen bzw. ist das Verfahren dazu geeignet, um in dem Haltesystem eingesetzt zu werden und dessen Merkmale teilweise oder vollständig zu bewirken.

Es ist möglich, dass die Veränderungsangabe für eine Veränderung durch einen Verschleiß bei der jeweiligen bestehenden Halterungseinrichtung, insbesondere eines Getriebes der Halterungseinrichtung, spezifisch ist. Hierdurch wird eine Veränderung besonders exakt quantifizierbar.

Es ist auch möglich, dass die Anpassung dadurch initiiert wird, dass eine Signalübertragung von einer Automatisierungseinrichtung an einen Elektromotor der weiteren Haltevorrichtung angepasst wird, vorzugsweise Steuerungsbefehle und/oder ein Steuerungssignal angepasst wird, um eine Reduzierung der Halterungskraft, bevorzugt Spannkraft, bei der weiteren Haltevorrichtung gegenüber der Halterungskraft, bevorzugt Spannkraft, der jeweiligen bestehenden Haltevorrichtung vorzunehmen. Hierdurch wird eine besonders integrierte und nutzerfreundliche Anpassung ermöglicht.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Darüber hinaus kann das erfindungsgemäße Verfahren auch als ein computerimplementiertes Verfahren ausgeführt sein.

Im Folgenden sind Ausführungsbeispiele der Erfindung beschrieben. Hierzu zeigt:
- Fig. 1: eine schematische Seitenansicht einer Ausführungsform eines Haltesystems zur vorrübergehenden Halterung eines Werkstücks;
- Fig. 2: ein schematisches Ablaufdiagramm einer Ausführungsform eines Verfahrens zur Anpassung einer Halterungskraft bei einer Halterungsanordnung;
- Fig. 3: eine Vorrichtung zur Datenverarbeitung; und
- Fig. 4: ein Computerprogramm.
- Fig. 5: weitere Einzelheiten eines Haltesystems gemäß einem Ausführungsbeispiel der Erfindung.
- Fig. 6: weitere Einzelheiten eines Haltesystems gemäß einem Ausführungsbeispiel der Erfindung.
- Fig. 7: weitere Teile eines Haltesystems gemäß einem Ausführungsbeispiel der Erfindung.

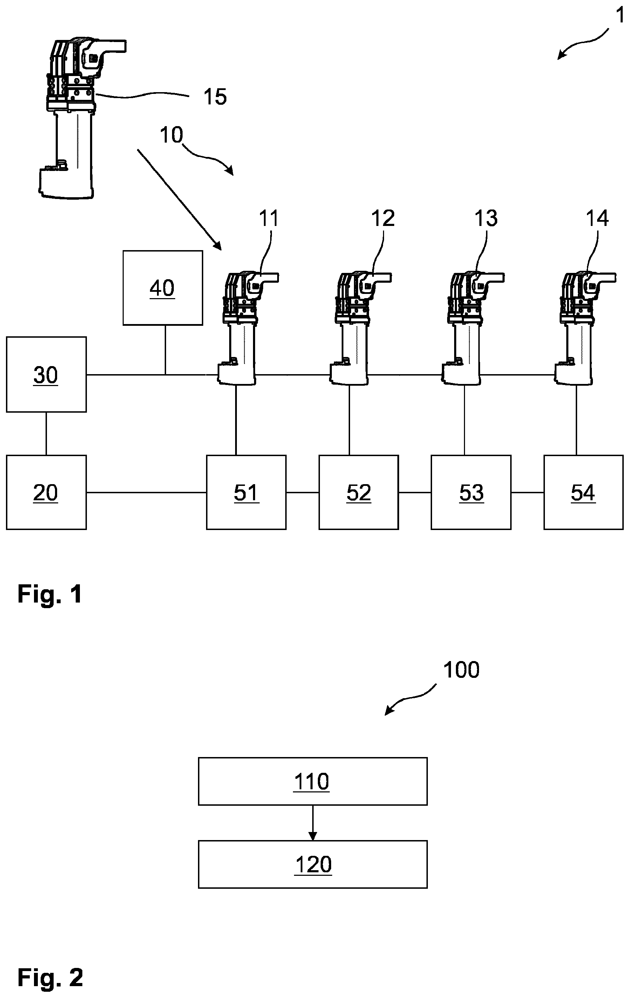

Fig. 1 zeigt eine schematische Seitenansicht einer Ausführungsform eines Haltesystems 1 zur vorrübergehenden Halterung eines hier nicht näher abgebildeten Werkstücks.

Das Haltesystem 1 umfasst eine Halterungsanordnung 10, die mindestens eine oder mehrere bestehende Halterungseinrichtungen 11 bis 14 aufweist, von denen hier beispielhaft vier bestehende Halterungseinrichtungen 11 bis 14 abgebildet sind. Die Halterungseinrichtungen 11 bis 14 sind dabei ausgebildet, um ein Werkstück mit einer Halterungskraft der jeweiligen Halterungseinrichtung 11 bis 14 zu halten.

Das Haltesystem 1 kann auch ein Erfassungsmittel 20 umfassen, das ausgebildet ist, eine Veränderung der Halterungskraft der bestehenden Halterungseinrichtungen 11 bis 14 zu quantifizieren. Vorliegend ist beispielhaft anzunehmen, dass die bestehende Halterungseinrichtung 11 defekt ist und durch eine weitere neue Halterungseinrichtung 15 ersetzt werden soll. Dazu kann das Haltesystem 1 ein Einstellungsmittel 30 umfassen, das ausgebildet ist, die Halterungskraft einer weiteren Halterungseinrichtung 15 auf Basis der quantifizierten Veränderung anzupassen.

Das Haltesystem 1 kann auch ein Erkennungsmittel 40 umfassen, das ausgebildet ist, ein Bereitstellen der weiteren Halterungseinrichtung 15 zu erkennen, vorzugsweise ein Ersetzen einer auszutauschenden Halterungseinrichtung 11 mit der weiteren Halterungseinrichtung 15 zu erkennen, wobei das Einstellungsmittel 40 ausgebildet ist, die Halterungskraft der weiteren Halterungseinrichtung 15 in Erwiderung auf die erkannte Bereitstellung einzustellen.

Das Erfassungsmittel 20 kann dabei ausgebildet sein, die Veränderung dadurch zu quantifizieren, dass ein Betriebsalter der bestehenden Halterungseinrichtungen 11 bis 14 ermittelt wird, um eine alterungsbedingte Reduzierung der Halterungskraft basierend auf dem ermittelten Betriebsalter zu bestimmen.

Alternativ oder zusätzlich kann das Erfassungsmittel 20 ausgebildet sein, die Veränderung dadurch zu quantifizieren, dass eine Anzahl von durchgeführten Haltevorgängen der bestehenden Halterungseinrichtungen 11 bis 14 ermittelt wird, um eine betriebsbedingte Reduzierung der Halterungskraft auf Basis der ermittelten Haltevorgängen zu bestimmen.

Ebenfalls alternativ oder zusätzlich kann das Erfassungsmittel 20 ausgebildet sein, die Veränderung dadurch zu quantifizieren, dass eine Summe einer aufgewendeten Halterungskraft der bestehenden Halterungseinrichtungen 11 bis 14 über einen vergangenen Betrieb der bestehenden Halterungseinrichtungen 11 bis 14 ermittelt wird, um eine belastungsbedingte Reduzierung der Halterungskraft basierend auf der ermittelten Summe zu bestimmen.

Auch alternativ oder zusätzlich kann das Erfassungsmittel 20 ausgebildet sein, eine Halterungskraft der bestehenden Halterungseinrichtungen 11 bis 14 zu ermitteln und die Veränderung basierend auf der ermittelten Halterungskraft zu quantifizieren, wobei die Halterungskraft von zumindest einer Krafterfassungseinrichtung erfasst, und für das Erfassungsmittel bereitgestellt wird. Wie vorliegend gezeigt, sind für jede der bestehenden Halterungseinrichtungen 11 bis 14 jeweilige Krafterfassungseinrichtungen 51 bis 54 vorgesehen, die die Halterungskraft von jeder der bestehenden Halterungseinrichtungen erfassen kann.

Ebenfalls alternativ oder zusätzlich kann das Erfassungsmittel 20 ausgebildet sein, die Veränderung dadurch zu quantifizieren, dass eine manuelle Eingabe eines Benutzers ausgewertet wird. Hierzu kann das Erfassungsmittel 20 eine Eingabeschnittstelle für den Benutzer bereitstellen.

Das Erfassungsmittel 20 kann auch ausgebildet sein, die jeweilige Halterungskraft der mehreren Halterungseinrichtungen 11 bis 14 zu ermitteln und einen Mittelwert daraus zu ermitteln, wobei das Einstellungsmittel 30 ausgebildet ist, die Halterungskraft der weiteren Halterungseinrichtung 15 auf den Mittelwert einzustellen.

Das Erfassungsmittel 20 kann ebenso ausgebildet sein, die Veränderung der Halterungskraft der bestehenden Halterungseinrichtungen 11 bis 14 und der weiteren Halterungseinrichtung 15 zu ermitteln, wobei das Einstellungsmittel 30 ausgebildet ist, die Halterungskraft der weiteren Halterungseinrichtung 15 basierend auf den ermittelten Halterungskräften einzustellen.

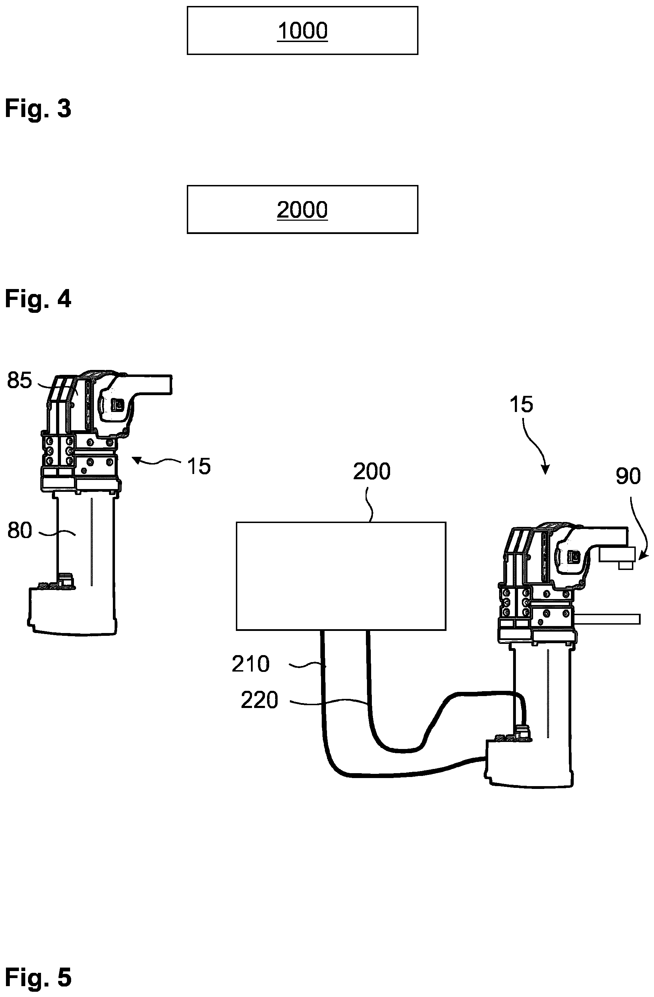

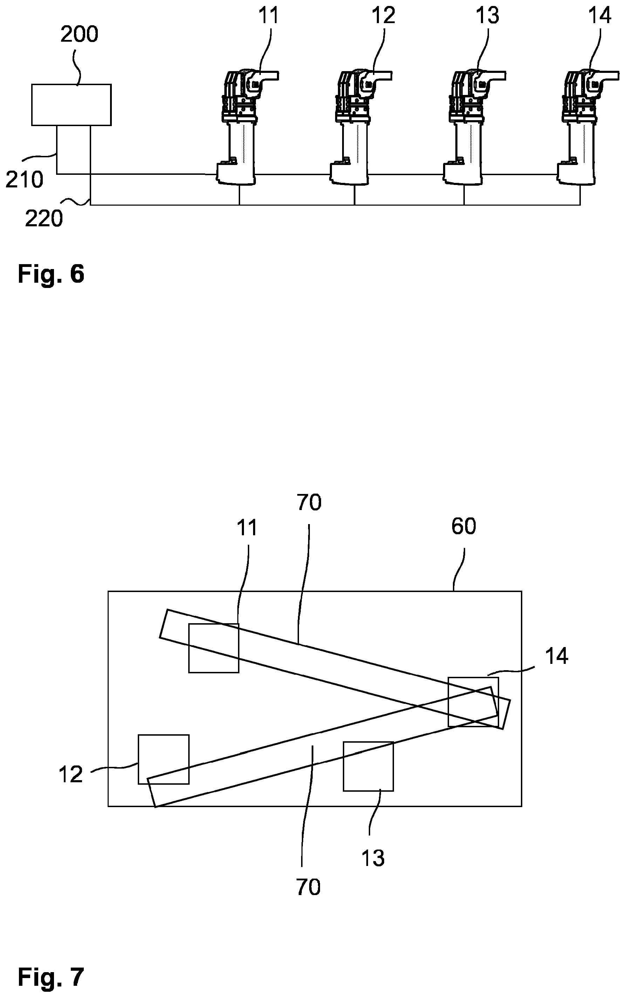

Es kann für das Haltesystem 1 auch ein in Fig. 7 abgebildeter Spannrahmen 60 vorgesehen sein, um das Werkstück (hier beispielhaft mit dem Bezugszeichen 70 abgebildet) für eine Bearbeitung zu fixieren, wobei am Spannrahmen 60 die mehreren Halterungseinrichtungen 11 bis 14 angeordnet sind, um das Werkstück an unterschiedlichen Stellen mit vorzugsweise gleichmäßiger Halterungskraft zu halten. Die Halterungseinrichtungen 11 bis 14 und optional auch 15 können dabei jeweils einen in Fig. 5 nur schematisch gezeigten Elektromotor 80 umfassen, wobei der Elektromotor 80 zur Bereitstellung der Halterungskraft ausgebildet ist, um eine Greifbewegung eines Greifmittels 90 zum Halten des Werkstücks zu steuern. Die Halterungseinrichtungen 11 bis 14 und optional auch 15 können auch ein ebenfalls nur schematisch gezeigtes Getriebe 85 zur Übertragung der bereitgestellten Halterungskraft von dem Elektromotor 80 an das Greifmittel 90 umfassen, um die Greifbewegung am Werkstück vorzunehmen. Dabei ist der Elektromotor 80 zur Energie- und/oder Signalübertragung mit einer Automatisierungseinrichtung 200 verbunden, insbesondere über entsprechende Datenkabel 210 und/oder Energiekabel 220 zur elektrischen Energieversorgung (s. Fig. 6), wobei das Erfassungsmittel 20 und das Einstellungsmittel 30 und vorzugsweise das Erkennungsmittel 40 jeweils Teil der Automatisierungseinrichtung 200 oder separat davon ausgebildet sein können und insbesondere Teile eines Computerprogrammes sind.

Das Einstellungsmittel 30 kann dabei ausgebildet sein, die Halterungskraft der weiteren Halterungseinrichtung 15 gegenüber der Halterungskraft der jeweiligen bestehenden Halterungseinrichtungen 11 bis 14 zu reduzieren, vorzugsweise durch eine Anpassung einer Energie- und/oder Signalübertragung von einer Automatisierungseinrichtung 200 an die weitere Halterungseinrichtung 15, um die Halterungskräfte gleichmäßig am Werkstück zu verteilen.

Fig. 2 zeigt ein schematisches Ablaufdiagramm einer Ausführungsform eines Verfahrens 100 zur Anpassung einer Halterungskraft bei einer Halterungsanordnung. Das gezeigte Verfahren 100 dient dabei zur Anpassung einer Halterungskraft bei einer Halterungsanordnung, insbesondere einer im Zusammenhang mit Fig. 1 gezeigten Halterungsanordnung 10 bzw. des dort gezeigten Halterungssystems 1, bei der zu mindestens einer oder mehreren bestehenden Halterungseinrichtungen mindestens eine weitere Halterungseinrichtung bereitgestellt wird, um ein Werkstück mit einer gleichmäßigen Halterungskraft der jeweiligen Halterungseinrichtung zu halten.

In einem ersten Schritt 110 des Verfahrens 100 wird eine Veränderungsangabe ermittelt, um eine Veränderung der Halterungskraft zu quantifizieren.

In einem weiteren Schritt 120 des Verfahrens 100 wird eine Anpassung der Halterungskraft der weiteren Halterungseinrichtung auf Basis der Veränderungsangabe initiiert, um die quantifizierte Veränderung auszugleichen.

Dabei kann die Veränderungsangabe für eine Veränderung durch einen Verschleiß bei der jeweiligen bestehenden Halterungseinrichtung, insbesondere eines Getriebes der Halterungseinrichtung, spezifisch sein.

Die Anpassung kann insbesondere dadurch initiiert werden, dass eine Signalübertragung von einer Automatisierungseinrichtung an einen Elektromotor der weiteren Haltevorrichtung angepasst wird, vorzugsweise Steuerungsbefehle und/oder ein Steuerungssignal angepasst wird, um eine Reduzierung der Halterungskraft, bevorzugt Spannkraft, bei der weiteren Haltevorrichtung gegenüber der bzw. angeglichen an die Halterungskraft, bevorzugt Spannkraft, der jeweiligen bestehenden Haltevorrichtung vorzunehmen.

Fig. 3 zeigt eine Vorrichtung 1000 zur Datenverarbeitung, umfassend Mittel zur Ausführung eines Verfahrens zur Anpassung einer Halterungskraft bei einer Halterungsanordnung wie im Zusammenhang mit Fig. 2 beschrieben.

Fig. 4 zeigt ein Computerprogramm 2000, das insbesondere als ein Computerprogrammprodukt ausgebildet sein kann, und welches Befehle umfasst, die bei der Ausführung des Computerprogrammes durch einen Computer diesen dazu veranlassen, ein zur Anpassung einer Halterungskraft bei einer Halterungsanordnung wie im Zusammenhang mit Fig. 2 beschrieben auszuführen.

### Bezugszeichenliste

- 1: Haltesystem

- 10: Halterungsanordnung

- 11-14: bestehende Halterungseinrichtung

- 15: weitere Halterungseinrichtung

- 20: Erfassungsmittel

- 30: Einstellungsmittel

- 40: Erkennungsmittel

- 51-54: Krafterfassungseinrichtung

- 60: Spannrahmen
- 70: Werkstück
- 80: Elektromotor
- 85: Getriebe
- 90: Greifmittel
- 100: Verfahren

- 110: Verfahrensschritt

- 120: Verfahrensschritt
- 200: Automatisierungseinrichtung
- 210: Datenkabel
- 220: Energiekabel
- 1000: Vorrichtung

- 2000: Computerprogramm

## Patentansprüche

1. Haltesystem (1) zur vorrübergehenden Halterung eines Werkstücks, umfassend:
- eine Halterungsanordnung (10), die mindestens eine oder mehrere bestehende Halterungseinrichtungen (11 ... 14) aufweist, um ein Werkstück mit einer Halterungskraft der jeweiligen Halterungseinrichtung (11 ... 14) zu halten;
- ein Erfassungsmittel (20), das ausgebildet ist, eine Veränderung der Halterungskraft der bestehenden Halterungseinrichtungen (11 ... 14) zu quantifizieren; **gekennzeichnet durch**
- ein Einstellungsmittel (30), das ausgebildet ist, die Halterungskraft einer weiteren Halterungseinrichtung (15) auf Basis der quantifizierten Veränderung anzupassen.

2. Haltesystem (1) nach Anspruch 1,
**dadurch gekennzeichnet,**
**dass** das Haltesystem (1) ferner umfasst:
- ein Erkennungsmittel (40), das ausgebildet ist, ein Bereitstellen der weiteren Halterungseinrichtung (15) zu erkennen, vorzugsweise ein Ersetzen einer auszutauschenden Halterungseinrichtung (11) mit der weiteren Halterungseinrichtung (15) zu erkennen,
wobei das Einstellungsmittel (30) ausgebildet ist, die Halterungskraft der weiteren Halterungseinrichtung (15) in Erwiderung auf die erkannte Bereitstellung einzustellen.

3. Haltesystem nach einem der vorhergehenden Ansprüche,
**dadurch gekennzeichnet,**
**dass** das Erfassungsmittel (20) ausgebildet ist, die Veränderung dadurch zu quantifizieren, dass ein Betriebsalter der bestehenden Halterungseinrichtungen (11 ... 14) ermittelt wird, um eine alterungsbedingte Reduzierung der Halterungskraft basierend auf dem ermittelten Betriebsalter zu bestimmen.

4. Haltesystem nach einem der vorhergehenden Ansprüche,
**dadurch gekennzeichnet,**
**dass** das Erfassungsmittel (20) ausgebildet ist, die Veränderung dadurch zu quantifizieren, dass eine Anzahl von durchgeführten Haltevorgängen der bestehenden Halterungseinrichtungen (11 ... 14) ermittelt wird, um eine betriebsbedingte Reduzierung der Halterungskraft auf Basis der ermittelten Haltevorgängen zu bestimmen.

5. Haltesystem nach einem der vorhergehenden Ansprüche,
**dadurch gekennzeichnet,**
**dass** das Erfassungsmittel (20) ausgebildet ist, die Veränderung dadurch zu quantifizieren, dass eine Summe einer aufgewendeten Halterungskraft der bestehenden Halterungseinrichtungen (11 ... 14) über einen vergangenen Betrieb der bestehenden Halterungseinrichtungen (11 ... 14) ermittelt wird, um eine belastungsbedingte Reduzierung der Halterungskraft basierend auf der ermittelten Summe zu bestimmen.

6. Haltesystem nach einem der vorhergehenden Ansprüche,
**dadurch gekennzeichnet,**
**dass** das Erfassungsmittel (20) ausgebildet ist, eine Halterungskraft der bestehenden Halterungseinrichtungen (11 ... 14) zu ermitteln und die Veränderung basierend auf der ermittelten Halterungskraft zu quantifizieren, wobei die Halterungskraft von einer Krafterfassungseinrichtung (51 ... 54) erfasst und für das Erfassungsmittel (20) bereitgestellt wird.

7. Haltesystem nach einem der vorhergehenden Ansprüche,
**dadurch gekennzeichnet,**
**dass** das Erfassungsmittel (20) ausgebildet ist, die jeweilige Halterungskraft der mehreren Halterungseinrichtungen (11 ... 14) zu ermitteln und einen Mittelwert daraus zu ermitteln, wobei das Einstellungsmittel (30) ausgebildet ist, die Halterungskraft der weiteren Halterungseinrichtung (15) auf den Mittelwert einzustellen.

8. Haltesystem nach einem der vorhergehenden Ansprüche,
**dadurch gekennzeichnet,**
**dass** das Erfassungsmittel (20) ausgebildet ist, die Veränderung der Halterungskraft der bestehenden Halterungseinrichtungen (11 ... 14) und der weiteren Halterungseinrichtung (15) zu ermitteln, wobei das Einstellungsmittel (30) ausgebildet ist, die Halterungskraft der weiteren Halterungseinrichtung (15) basierend auf den ermittelten Halterungskräften einzustellen.

9. Haltesystem nach einem der vorhergehenden Ansprüche,
**dadurch gekennzeichnet,**
**dass** ein Spannrahmen vorgesehen ist, um das Werkstück für eine Bearbeitung zu fixieren, wobei am Spannrahmen die mehreren Halterungseinrichtungen angeordnet sind, um das Werkstück an unterschiedlichen Stellen mit vorzugsweise gleichmäßiger Halterungskraft zu halten, wobei die Halterungseinrichtungen (11 ... 14) jeweils umfassen:
- einen Elektromotor zur Bereitstellung der Halterungskraft, um eine Greifbewegung eines Greifmittels zum Halten des Werkstücks zu steuern,
- ein Getriebe zur Übertragung der bereitgestellten Halterungskraft von dem Elektromotor an das Greifmittel, um die Greifbewegung am Werkstück vorzunehmen,
wobei der Elektromotor zur Energie- und/oder Signalübertragung mit einer Automatisierungseinrichtung verbunden ist, wobei das Erfassungsmittel und das Einstellungsmittel und vorzugsweise das Erkennungsmittel Teil der Automatisierungseinrichtung und insbesondere eines Computerprogrammes der Automatisierungseinrichtung sind.

10. Haltesystem nach einem der vorhergehenden Ansprüche,
**dadurch gekennzeichnet,**
**dass** das Einstellungsmittel (30) ausgebildet ist, die Halterungskraft der weiteren Halterungseinrichtung (15) gegenüber der Halterungskraft der jeweiligen bestehenden Halterungseinrichtungen (11 ... 14) zu reduzieren, vorzugsweise durch eine Anpassung einer Energie- und/oder Signalübertragung von einer Automatisierungseinrichtung an die weitere Halterungseinrichtung, um die Halterungskräfte gleichmäßig am Werkstück zu verteilen.

11. Verfahren (100) zur Anpassung einer Halterungskraft bei einer Halterungsanordnung (10), bei der zu mindestens einer oder mehreren bestehenden Halterungseinrichtungen (11 ... 14) mindestens eine weitere Halterungseinrichtung (15) bereitgestellt wird, um ein Werkstück mit einer gleichmäßigen Halterungskraft der jeweiligen Halterungseinrichtung zu halten, umfassend:
- Ermitteln (110) einer Veränderungsangabe, um eine Veränderung der Halterungskraft zu quantifizieren,
- Initiieren (120) einer Anpassung der Halterungskraft der weiteren Halterungseinrichtung (15) auf Basis der Veränderungsangabe, um die quantifizierte Veränderung auszugleichen.

12. Verfahren nach Anspruch 11,
**dadurch gekennzeichnet,**
**dass** die Veränderungsangabe für eine Veränderung durch einen Verschleiß bei der jeweiligen bestehenden Halterungseinrichtung (11 ... 14), insbesondere eines Getriebes der Halterungseinrichtung, spezifisch ist.

13. Verfahren nach Anspruch 11 oder 12,
**dadurch gekennzeichnet,**
**dass** die Anpassung dadurch initiiert wird, dass eine Signalübertragung von einer Automatisierungseinrichtung an einen Elektromotor der weiteren Haltevorrichtung angepasst wird, vorzugsweise Steuerungsbefehle und/oder ein Steuerungssignal angepasst werden, um eine Reduzierung der Halterungskraft, bevorzugt Spannkraft, bei der weiteren Haltevorrichtung gegenüber der und/oder angeglichen an die Halterungskraft, bevorzugt Spannkraft, der jeweiligen bestehenden Haltevorrichtung vorzunehmen.

14. Vorrichtung zur Datenverarbeitung, umfassend Mittel zur Ausführung eines Verfahrens nach einem der vorhergehenden Ansprüche 11 bis 13.

15. Computerprogramm, insbesondere Computerprogrammprodukt, umfassend Befehle, die bei der Ausführung des Computerprogrammes durch einen Computer diesen veranlassen, ein Verfahren nach einem der vorhergehenden Ansprüche 11 bis 13 auszuführen.

## Claims

1. Holding system (1) for temporarily holding a workpiece, comprising:
- a holding arrangement (10) having at least one or more existing holding devices (11 ... 14) to hold a workpiece with a holding force of the respective holding device (11 ... 14);
- a detection means (20) configured to quantify a change in the holding force of the existing holding devices (11 ... 14); **characterized by**
- an adjustment means (30) configured to adjust the holding force of a further holding device (15) on the basis of the quantified change.

2. Holding system (1) according to claim 1,
**characterized in that**
the holding system (1) further comprises:
- a recognition means (40) configured to recognize a provision of the further holding device (15), preferably to recognize a replacement of a holding device (11) to be replaced with the further holding device (15),
wherein the adjustment means (30) is configured to adjust the holding force of the further holding device (15) in response to the recognized provision.

3. Holding system according to any one of the preceding claims,
**characterized in that**
the detection means (20) is configured to quantify the change by determining an operating age of the existing holding devices (11 ... 14) in order to determine an agerelated reduction in the holding force based on the determined operating age.

4. Holding system according to any one of the preceding claims,
**characterized in that**
the detection means (20) is configured to quantify the change by determining a number of holding operations performed by the existing holding devices (11 ... 14) in order to determine an operation-related reduction in the holding force on the basis of the determined holding operations.

5. Holding system according to any one of the preceding claims,
**characterized in that**
the detection means (20) is configured to quantify the change by determining a sum of an exerted holding force of the existing holding devices (11 ... 14) over a past operation of the existing holding devices (11 ... 14) in order to determine a loadrelated reduction in the holding force based on the determined sum.

6. Holding system according to any one of the preceding claims,
**characterized in that**
the detection means (20) is configured to determine a holding force of the existing holding devices (11 ... 14) and to quantify the change based on the determined holding force, wherein the holding force is detected by a force detection device (51 ... 54) and is provided for the detection means (20).

7. Holding system according to any one of the preceding claims,
**characterized in that**
the detection means (20) is configured to determine the respective holding force of the plurality of holding devices (11 ... 14) and to determine an average value therefrom, wherein the adjustment means (30) is configured to adjust the holding force of the further holding device (15) to the average value.

8. Holding system according to any one of the preceding claims,
**characterized in that**
the detection means (20) is configured to determine the change in the holding force of the existing holding devices (11 ... 14) and of the further holding device (15), wherein the adjustment means (30) is configured to adjust the holding force of the further holding device (15) based on the determined holding forces.

9. Holding system according to any one of the preceding claims,
**characterized in that**
a clamping frame is provided to fix the workpiece for processing, wherein the plurality of holding devices are arranged on the clamping frame to hold the workpiece at different locations preferably with a uniform holding force, wherein the holding devices (11 ... 14) each comprise:
- an electric motor for providing the holding force to control a gripping movement of a gripping means for holding the workpiece,
- a gear mechanism for transmitting the provided holding force from the electric motor to the gripping means to perform the gripping movement on the workpiece,
wherein the electric motor is connected to an automation device for energy and/or signal transmission, wherein the detection means and the adjustment means and preferably the recognition means are part of the automation device and in particular of a computer program of the automation device.

10. Holding system according to any one of the preceding claims,
**characterized in that**
the adjustment means (30) is configured to reduce the holding force of the further holding device (15) compared to the holding force of the respective existing holding devices (11 ... 14), preferably by adapting an energy and/or signal transmission from an automation device to the further holding device, in order to distribute the holding forces uniformly on the workpiece.

11. Method (100) for adjusting a holding force in a holding arrangement (10) in which at least one further holding device (15) is provided in addition to at least one or more existing holding devices (11 ... 14) to hold a workpiece with a uniform holding force of the respective holding device, comprising:
- determining (110) a change indication to quantify a change in the holding force,
- initiating (120) an adjustment of the holding force of the further holding device (15) on the basis of the change indication in order to compensate for the quantified change.

12. Method according to claim 11,
**characterized in that**
the change indication is specific to a change caused by wear in the respective existing holding device (11 ... 14), in particular of a gear mechanism of the holding device.

13. Method according to claim 11 or 12,
**characterized in that**
the adjustment is initiated by adapting a signal transmission from an automation device to an electric motor of the further holding device, preferably by adapting control commands and/or a control signal, to carry out a reduction of the holding force, preferably clamping force, in the further holding device compared to and/or matched to the holding force, preferably clamping force, of the respective existing holding device.

14. Data processing apparatus comprising means for executing a method according to any one of the preceding claims 11 to 13.

15. Computer program, in particular computer program product, comprising instructions which, when the computer program is executed by a computer, cause the computer to carry out a method according to any one of the preceding claims 11 to 13.

## Revendications

1. Système de retenue (1) pour la fixation provisoire d'une pièce, comprenant :
- un agencement de retenue (10) comportant au moins un ou plusieurs dispositifs de retenue existants (11 ... 14) pour retenir une pièce avec une force de retenue du dispositif de retenue respectif (11 ... 14) ;
- un moyen de détection (20), conçu pour quantifier une variation de la force de retenue des dispositifs de retenue existants (11 ... 14) ; **caractérisé par**
- un moyen de réglage (30), conçu pour régler la force de retenue d'un dispositif de retenue supplémentaire (15) sur la base de la variation quantifiée.

2. Système de retenue (1) selon la revendication 1,
**caractérisé en ce que**
le système de retenue (1) comprend en outre :
- un moyen de détection (40), conçu pour détecter une mise à disposition du dispositif de retenue supplémentaire (15), de préférence pour détecter un remplacement d'un dispositif de retenue à échanger (11) par le dispositif de retenue supplémentaire (15), le moyen de réglage (30) étant conçu pour régler la force de retenue du dispositif de retenue supplémentaire (15) en réponse à la mise à disposition détectée.

3. Système de retenue selon l'une quelconque des revendications précédentes,
**caractérisé en ce que**
le moyen de détection (20) est conçu pour quantifier la variation **en ce qu'**un âge de fonctionnement des dispositifs de retenue existants (11 ... 14) est déterminé afin de déterminer une réduction de la force de retenue liée au vieillissement sur la base de l'âge de fonctionnement déterminé.

4. Système de retenue selon l'une quelconque des revendications précédentes,
**caractérisé en ce que**
le moyen de détection (20) est conçu pour quantifier la variation **en ce qu'**un certain nombre d'opérations de retenue effectuées par les dispositifs de retenue existants (11 ... 14) est déterminé afin de déterminer une réduction de la force de retenue liée au fonctionnement sur la base du nombre d'opérations de retenue déterminé.

5. Système de retenue selon l'une quelconque des revendications précédentes,
**caractérisé en ce que**
le moyen de détection (20) est conçu pour quantifier la variation **en ce qu'**une somme de la force de retenue appliquée par les dispositifs de retenue existants (11 ... 14) au cours d'un fonctionnement passé des dispositifs de retenue existants (11 ... 14) est déterminée afin de déterminer une réduction de la force de retenue liée à la sollicitation sur la base de la somme déterminée.

6. Système de retenue selon l'une quelconque des revendications précédentes,
**caractérisé en ce que**
le moyen de détection (20) est conçu pour déterminer une force de retenue des dispositifs de retenue existants (11 ... 14) et pour quantifier la variation sur la base de la force de retenue déterminée, la force de retenue étant détectée par un dispositif de détection de force (51 ... 54) et mise à disposition pour le moyen de détection (20).

7. Système de retenue selon l'une quelconque des revendications précédentes,
**caractérisé en ce que**
le moyen de détection (20) est conçu pour déterminer la force de retenue respective de la pluralité de dispositifs de retenue (11 ... 14) et pour en déterminer une valeur moyenne, le moyen de réglage (30) étant conçu pour régler la force de retenue du dispositif de retenue supplémentaire (15) sur la valeur moyenne.

8. Système de retenue selon l'une quelconque des revendications précédentes,
**caractérisé en ce que**
le moyen de détection (20) est conçu pour déterminer la variation de la force de retenue des dispositifs de retenue existants (11 ... 14) et du dispositif de retenue supplémentaire (15), le moyen de réglage (30) étant conçu pour régler la force de retenue du dispositif de retenue supplémentaire (15) sur la base des forces de retenue déterminées.

9. Système de retenue selon l'une quelconque des revendications précédentes,
**caractérisé en ce qu'**un cadre de serrage est prévu pour fixer la pièce pour un usinage, la pluralité de dispositifs de retenue étant disposée sur le cadre de serrage afin de maintenir la pièce en différents endroits avec une force de retenue de préférence uniforme, dans lequel les dispositifs de retenue (11 ... 14) comprennent chacun :
- un moteur électrique destiné à fournir la force de retenue afin de commander un mouvement de préhension d'un moyen de préhension pour retenir la pièce,
- un engrenage destiné à transmettre la force de retenue fournie par le moteur électrique vers le moyen de préhension afin d'effectuer le mouvement de préhension sur la pièce, le moteur électrique étant relié à un dispositif d'automatisation pour la transmission d'énergie et/ou de signaux, le moyen de détection et le moyen de réglage et de préférence le moyen de reconnaissance faisant partie du dispositif d'automatisation et en particulier d'un programme informatique du dispositif d'automatisation.

10. Système de retenue selon l'une quelconque des revendications précédentes,
**caractérisé en ce que**
le moyen de réglage (30) est conçu pour réduire la force de retenue du dispositif de retenue supplémentaire (15) par rapport à la force de retenue des différents dispositifs de retenue existants (11 ... 14), de préférence par un réglage d'une transmission d'énergie et/ou de signaux d'un dispositif d'automatisation vers le dispositif de retenue supplémentaire afin de répartir uniformément les forces de retenue sur la pièce.

11. Procédé (100) de réglage d'une force de retenue dans un agencement de retenue (10), dans lequel, en plus d'au moins un ou de plusieurs dispositifs de retenue existants (11 ... 14), au moins un dispositif de retenue supplémentaire (15) est mis à disposition afin de retenir une pièce avec une force de retenue uniforme du dispositif de retenue respectif, comprenant :
- détermination (110) d'une indication de variation pour quantifier une variation de la force de retenue,
- initiation (120) d'un réglage de la force de retenue du dispositif de retenue supplémentaire (15) sur la base de l'indication de variation pour compenser la variation quantifiée.

12. Procédé selon la revendication 11,
**caractérisé en ce que**
l'indication de variation est spécifique d'une variation due à une usure au niveau du dispositif de retenue existant respectif (11 ... 14), en particulier d'un engrenage du dispositif de retenue.

13. Procédé selon l'une des revendications 11 ou 12,
**caractérisé en ce que**
le réglage est initié **en ce qu'**une transmission de signaux d'un dispositif d'automatisation vers un moteur électrique du dispositif de retenue supplémentaire est réglée, de préférence **en ce que** des ordres de commande et/ou un signal de commande sont réglés afin d'effectuer une réduction de la force de retenue, de préférence de la force de serrage, du dispositif de retenue supplémentaire par rapport à la force de retenue, de préférence la force de serrage, du dispositif de retenue existant respectif et/ou de l'aligner sur celle-ci.

14. Dispositif de traitement de données, comprenant des moyens pour l'exécution d'un procédé selon l'une quelconque des revendications précédentes 11 à 13.

15. Programme informatique, en particulier produit programme informatique, comprenant des instructions qui, lors de l'exécution du programme informatique par un ordinateur, amènent celuici à exécuter un procédé selon l'une quelconque des revendications précédentes 11 à 13.
